# EUROPEAN PATENT SPECIFICATION

(11) **EP 4 330 878 B1**
(45) Date of publication and mention of the grant of the patent: **18.03.2026**
(21) Application number: 22720083.9
(22) Date of filing: 26.04.2022
(51) Int. Cl.: G06Q 10/20

(54) **SYSTEM FOR TROUBLESHOOTING A VEHICLE**
SYSTEM ZUR FEHLERSUCHE IN EINEM FAHRZEUG
SYSTÈME DE DÉPANNAGE D'UN VÉHICULE

(30) Priority: 30.04.2021 SE 2150552
(43) Date of publication of application: 06.03.2024
(73) Proprietor: Scania CV AB, 151 87 Södertälje (SE)
(72) Inventor: STEINERT, Olof, 126 48 Hägersten (SE); ANDERSSON, Niklas, 131 72 Nacka (SE); WARNQUIST, Håkan, 152 70 Södertälje (SE); RÖNNQVIST, Patrik, 603 71 Norrköping (SE)
(74) Representative: Scania CV AB
(86) International application number: PCT/SE2022/050405
(87) International publication number: WO 2022/231503

(56) References cited:
- DE-A1- 102018 209 773
- US-A1- 2020 013 022
- US-A1- 2020 258 057

## Description

### TECHNICAL FIELD

The present invention relates to a method configured to perform troubleshooting of a vehicle. The invention further relates to a system, a computer program product, and a computer-readable storage medium.

### BACKGROUND

Computer support is very helpful to create recommender systems targeted to support initial troubleshooting process of vehicles, e.g., in a workshop or control tower. Patterns of successful historical repairs together with other data such as historical vehicle data, vehicle operational variables, vehicle specification may be used by a service coordinator to generate repair recommendations to technicians.

A drawback with conventional systems is that automatic sensor input is limited and does not provide a complete picture of the symptoms of some defects of the vehicle. Observations by users, e.g., a driver of the vehicle, is invaluable to identify and diagnose the correct parts.

A conventional solution is disclosed in document US2020258057A1 where a machine learning model associated with a certain repair category is used to determine one or more repair actions. Further, the repair actions flow to a client or vehicle.

Sensors may be limited both in numbers and in capability compared to a human. E.g., smell sensors is not generally used in vehicles, whereas a human immediately senses deviating smells, such as scent from overheated components.

Thus, there is a need for an improved method to perform troubleshooting of a vehicle.

### OBJECTS OF THE INVENTION

An objective of embodiments of the present invention is to provide a solution which mitigates or solves the drawbacks described above.

### SUMMARY OF THE INVENTION

The above and further objectives are achieved by the subject matter described herein. Further advantageous implementation forms of the invention are described herein.

According to a first aspect of the invention objects of the invention are achieved by a method performed by a system configured to perform troubleshooting of a vehicle, the method comprising obtaining a defect report, related to the vehicle, in a natural language, selecting one or more classes from a plurality of classes by classifying the defect report using a trained model, wherein each class indicate a part or a unique part of the vehicle, performing troubleshooting of the vehicle by identifying one or more parts of the vehicle to be repaired using at least the one or more selected classes.

At least one advantage of the first aspect of the invention is that complexity and time required to troubleshoot a vehicle can be reduced by identifying faulty parts earlier and with more accuracy. A further advantage is that information loss is reduced by maintaining all information gathered in the chain from user/driver, coordinator, and technician. A further advantage is that dependency of highly experienced coordinators can be reduced by collecting and accumulating troubleshooting/repair experience in the system. A further advantage is that the troubleshooting is more streamlined between workshops as the most likely parts to be addressed are identified by the system. A further advantage is that fault trends for a particular model of a vehicle can be identified by using the trained model.

According to a second aspect of the invention the objects of the invention are achieved by a system configured to perform troubleshooting of a vehicle, the system comprising a processor, and a memory, said memory containing instructions executable by said processor, wherein said system is configured to perform the method according to the first aspect.

According to a third aspect of the invention the objects of the invention are achieved by a computer program product comprising instructions which, when the program is executed by a computer, cause the computer to carry out the method according to the first aspect.

According to a fourth aspect of the invention the objects of the invention are achieved by a computer-readable storage medium comprising instructions which, when executed by a computer, cause the computer to carry out the steps of the method according to the first aspect.

The advantages of the second to fourth aspects are at least the same as for the first aspect.

The scope of the invention is defined by the claims, which are incorporated into this section by reference. A more complete understanding of embodiments of the invention will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

**Fig. 1** shows a system configured to perform troubleshooting of a vehicle according to one or more embodiments of the present disclosure.
**Fig. 2** shows an example according to one or more embodiments of the present disclosure.
**Fig. 3** shows a device according to one or more embodiments of the present disclosure.
**Fig. 4** shows a flowchart of a method according to one or more embodiments of the present disclosure.
**Fig. 5** shows an example of how selected classes may be displayed.

A more complete understanding of embodiments of the invention will be afforded to those skilled in the art, as well as a realization of additional advantages thereof, by a consideration of the following detailed description of one or more embodiments. It should be appreciated that like reference numerals are used to identify like elements illustrated in one or more of the figures.

### DETAILED DESCRIPTION

An "or" in this description and the corresponding claims is to be understood as a mathematical OR which covers "and" and "or", and is not to be understand as an XOR (exclusive OR). The indefinite article "a" in this disclosure and claims is not limited to "one" and can also be understood as "one or more", i.e., plural.

In the present disclosure, the expression "device" and/or "system" denotes a unit comprising processor, and a memory, said memory containing instructions executable by said processor, wherein said unit is configured to perform the method described herein. The unit is typically capable of receiving input data that is comprised in control signals, and to control other units by sending commands comprised in control signals. In one example, the control unit is a general-purpose computer or an Electric Control Unit, ECU.

In the present disclosure, the expression "troubleshooting" denotes problem solving, typically applied to repair failed products or processes on a machine or a system, such as a vehicle. Troubleshooting typically involves systematic search for the source of a problem in order to solve it and make the product or process operational again.

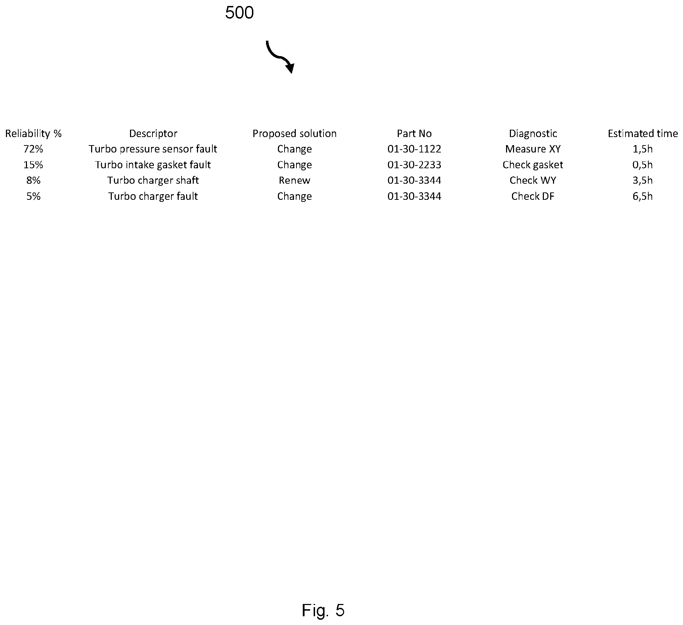

In one example, troubleshooting may involve replacing parts or to propose replacing of parts of a vehicle in an order that most likely resolves a problem, e.g., as illustrated in Fig. 5. In a further example, troubleshooting may involve activating backup units or secondary units to resolve the problem. The troubleshooting may be performed by the system, or by a user supported by the system.

In the present disclosure, the expression "natural language" denotes a language that has evolved naturally in humans through use and repetition without conscious planning or premeditation, e.g., English, or Swedish.

In the present disclosure, the expressions "classifying", "classification" and "classification algorithm" are used interchangeably and denotes systematic grouping of input data into categories, such as one or more classes. Classifying is typically performed by a classification algorithm.

In the present disclosure, the expression "trained model" or "training of a model" signifies the step of producing a model from a training set of data by using machine learning. In one example this involves obtaining a training data set, having predetermined input values and/or desired output values. This may include natural language description of experienced defects/problems in a vehicle, and the resulting parts of the vehicle being replaced/repaired to solve the defects/problems. The model may then be trained using machine learning, e.g., unsupervised, or supervised learning, by repeatedly providing the input values to candidate models and registering model output values and calculating performance measure for each candidate model based on the training output values and model output values. The candidate model producing the highest performance measure is then selected as the trained model. The trained model may e.g., be configured to identify one or more parts of the vehicle to be repaired. The model may in one example be trained by selecting from any number of candidate models forming a hypothesis space, based on a performance measure. The performance measure may indicate how well the model output corresponds to the desired output in the training set for the model. The candidate model producing the highest performance measure may then be selected as the trained model. This may also be seen as tuning parameters of the model. Examples of machine learning training methods/techniques are supervised classification methods such as neural networks, Support Vector Machines, Naive Bayes, and k-Nearest Neighbor.

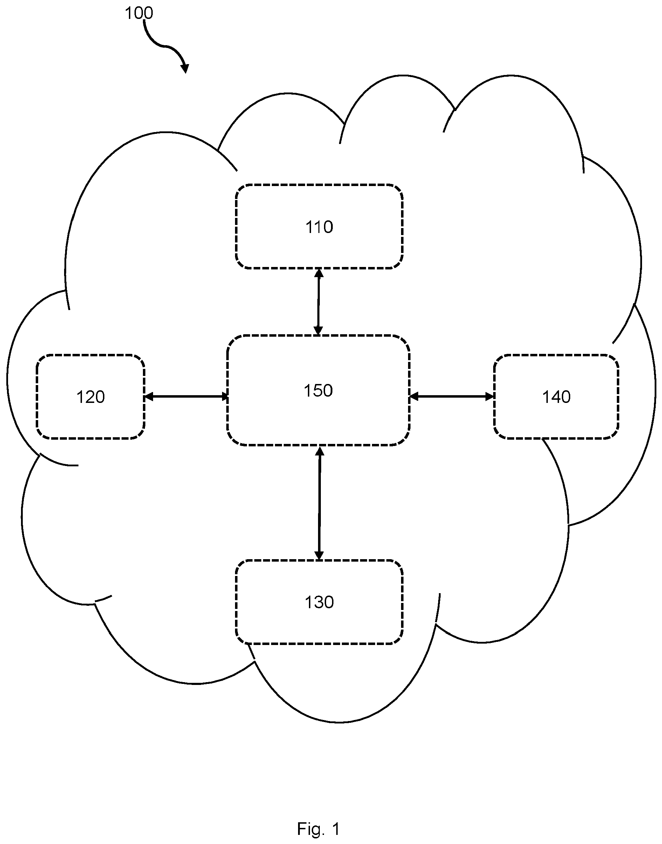

**Fig. 1** shows a system 100 configured to perform troubleshooting of a vehicle according to one or more embodiments of the present disclosure. The system comprises at least one set of a processor, and a memory, said memory containing instructions executable by said processor, wherein said system is configured to perform any of the method steps described herein.

The system may optionally comprise one or more user interfaces and/or one or more displays configured to display one or more selected classes on a display. The system may further comprise databases and resources for training and maintaining a trained model. Examples of databases may be databases for symptoms, main groups, parts database with associated article numbers and estimated service times. The system may further optionally comprise one or more communications interfaces, e.g., capable of receiving error codes from the vehicle, data from external databases etc.

In one example, the training data may e.g., be historical defect reports for a time-period in a natural language and the solution to the defect, e.g., replacing a turbo pressure sensor. The historical data may be divided into training data and verification data, where the training data is used to train the model and the verification data is used to verify the performance of the model during and after training. Further data collected from sensors for the corresponding time-period and data comprising fault codes for the corresponding time-period may also be used as training data.

In a further example, training data in the form of historical defect reports indicate "Noise from the left front wheel" in a vectorized format. Fault codes indicate "excessive wear of brake pad for the left front wheel". Sensor data indicate "excessive wear of brake pads for the left front wheel". The recorded diagnostics actions indicate "optical inspection of brake pads. Repair actions are recorded as "replace brake pads". The recorded time to implement the solution is "one hour". The training data is then divided into training data and verification data. The training data is then used to train the model by maximizing/minimizing a calculated performance measure. The performance measure may e.g., designate penalty points to candidate models that generates other diagnostics actions and/or repair actions and/or time to implement than the ones indicated by the training data.

The system may optionally comprise a troubleshooting device 110. The troubleshooting device 110 may e.g., be a cloud server. The troubleshooting device 110 may typically comprise a processor, memory, the databases, and the resources for training/generating and maintaining a trained model.

The system may optionally further comprise a user device 120 configured to receive a defect report related to the vehicle 223 in a natural language via a user interface. E.g., receiving a defect report via a user interface from a driver of the vehicle 223. The troubleshooting device 110 may typically comprise a processor and a memory.

The system may optionally further comprise a coordinator device 130 configured to display the one or more selected classes on a display. In one or more examples, the coordinator is a workshop coordinator, that studies the one or more classes on a display, each class displayed with a respective descriptor and reliability measure. Using the displayed classes, the coordinator provides input to the coordinator device 130, indicating a set of the one or more classes and optionally additional information to generate a work order. The system may provide further information, such as fault codes received from the vehicle, the original defect report etc. The displayed classes are illustrated in an example in Fig. 5. The coordinator device 130 may typically comprise a processor and a memory.

The system may optionally further comprise a technician device 140 configured to display the work order, including the coordinators indicated set of the one or more selected classes, on a display. The work order may e.g., include information such as the class descriptor, a proposed solution, a parts number, a diagnostic action, and an estimated time to implement the solution. In one or more examples, the technician is a mechanic, that studies the work order on a display. After successfully correcting the reported defect in the defect report, the technician may provide feedback on the implemented solution. The feedback is fed back to the system to update databases and/or to re-train/improve the trained model. The feedback may optionally be provided to other devices 110, 120, 130 for presentation to users 221, 231. The technician device 140 may typically comprise a processor and a memory.

The system may optionally further comprise a communications network 150, interconnecting any of the mentioned devices and any other nodes, such as external database servers or cloud servers.

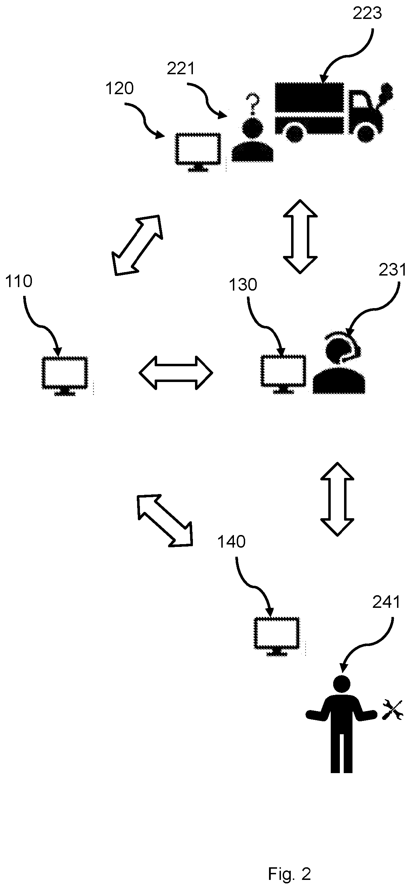

**Fig. 2** shows an example according to one or more embodiments of the present disclosure.

In the example below a certain number of devices are listed for easier understanding of the concept. It is understood that the system 100 may comprise any number of devices, and the method steps described herein may be freely distributed amongst those devices without deviating from the present disclosure.

In this example, a driver 221 provides a defect report in a natural language, e.g., by entering a text string "I experience loss of power when driving uphill" in a user interface of a user device 120. In other words, a defect report is obtained, related to the vehicle 223, in a natural language. The text may further be pre-processed and/or vectorized directly after input. Bag Of Words vectorization techniques may e.g., be applied.

A message, comprising the defect report, is sent over a communications network 150 to the troubleshooting device 110. The troubleshooting device 110 provides the defect report as input to a trained model. The text may optionally further be pre-processed and/or vectorized before being used as input to the trained model. The trained model classifies the defect report or selects one or more classes from a plurality of classes. In other words, the output is the selected one or more classes. Each class is indicative of a part or a unique part of the vehicle. The trained model may be generated using machine learning techniques as described herein.

In one example, the training data may e.g., be historical defect reports in a natural language and the solution to the defect, e.g., replacing a turbo pressure sensor. The historical data may be divided into training data and verification data, where the training data is used to train the model and the verification data is used to verify the performance of the model.

In one example, the one or more classes are provided with descriptors, such as "Turbo pressure sensor fault", "Turbo intake gasket fault", "Turbo charger shaft", "Turbo charger fault". The one or more classes may further be provided with respective reliability measures as a percentage, e.g., 72%, 15%, 8%, 5%.

A message, comprising the one or more selected classes, may further be sent to the coordinator device 130 for display to the coordinator 231. This may be seen as a recommendation by the system of which parts of the vehicle that are the most likely candidates to be diagnosed. Additional information, such as fault codes downloaded from the vehicle 223 may further be displayed on the display of the coordinator device 130. The coordinator 231 reads the information on the display, indicates a set of the one or more selected classes, and generates a work order using the coordinator device 130. The coordinator 231 may e.g., indicate "Turbo pressure sensor fault", which has a proposed solution of "change", a part number "01-30-1122", a diagnostic action "Measure XY" and an estimated time for implementation of 1.5 hours. E.g., the parts number and estimated time may be retrieved from the databases of the system further described in relation to Fig. 1.

A message, comprising the work order, including the one or more selected classes, may further be sent to the technician device 140 for display to the technician 241. The technician 241 initiates final troubleshooting and finds a solution to the defect indicated by the defect report.

A message, comprising feedback on the solution, may optionally be sent to other devices in the system 100, e.g., the troubleshooting device 110, the user device 120 and the coordinator device 130. The solution typically describes the part of the vehicle repaired/changed.

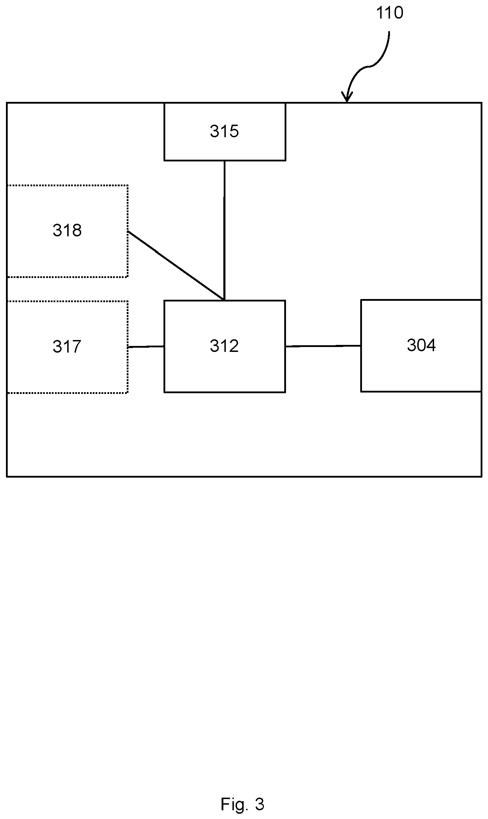

**Fig. 3** shows a device 110, 120, 130, 140 according to one or more embodiments of the present disclosure. The device may e.g., be in the form of an Electronic Control Unit, a server, an on-board computer, a vehicle mounted computer system or a navigation device. The device may comprise a processor or processing means 312 communicatively coupled to a transceiver 304 configured for wired or wireless communication. Further, the device may further comprise at least one optional antenna (not shown in figure). The antenna may be coupled to the transceiver 304 and is configured to transmit and/or emit and/or receive wireless signals in a wireless communication system, e.g., wireless signals comprising road traffic event data. In one example, the processor 312 may be any of a selection of processing circuitry and/or a central processing unit and/or processor modules and/or multiple processors configured to cooperate with each-other. Further, the device may further comprise a memory 315. The memory 315 may contain instructions executable by the processor to perform any of the methods described herein. The memory and/or computer-readable storage medium referred to herein may comprise of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

In a further embodiment, the device may further comprise and/or be coupled to one or more sensors configured to e.g., receive and/or obtain and/or measure physical properties pertaining to the system 100 or vehicle 223 and send one or more sensor signals indicative of the physical properties to the processing means 312.

In one or more embodiments the device may further comprise an input device 317, configured to receive input or indications from a user and send a user-input signal indicative of the user input or indications to the processor or processing means 312.

In one or more embodiments the device may further comprise a display 318 configured to receive a display signal indicative of rendered objects, such as text or graphical user input objects, from the processor or processing means 312 and to display the received signal as objects, such as text or graphical user input objects.

In one embodiment the display 318 is integrated with the user input device 317 and is configured to receive a display signal indicative of rendered objects, such as text or graphical user input objects, from the processing means 312 and to display the received signal as objects, such as text or graphical user input objects, and/or configured to receive input or indications from a user and send a user-input signal indicative of the user input or indications to the processing means 312.

In embodiments, the processing means 312 is communicatively coupled to a selection of any of the memory 315 and/or the communications interface and/or transceiver and/or the input device 317 and/or the display 318 and/or the one or more sensors. In embodiments, the transceiver 304 communicates using wired and/or wireless communication techniques. The wired or wireless communication techniques may comprise any of a CAN bus, Bluetooth, Wi-Fi, GSM, UMTS, LTE or LTE advanced communications network or any other wired or wireless communication network known in the art.

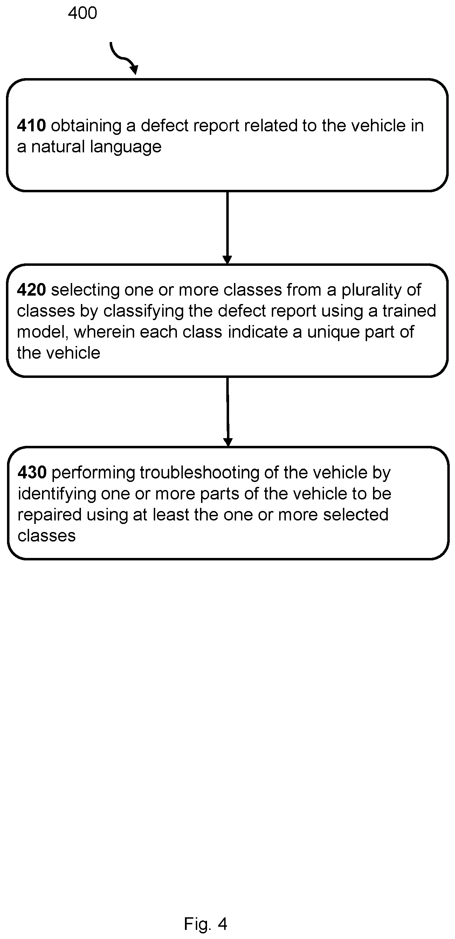

**Fig. 4** shows a flowchart of a method 400 according to one or more embodiments of the present disclosure. The method is performed by the system 100 configured to perform troubleshooting of the vehicle 223. The method comprises:
**Step 410:** obtaining a defect report, related to the vehicle 223, in a natural language. Obtaining the defect report is further described in relation to Fig. 2. It is understood that also other information, as an image of a part of the vehicle, may be attached to the defect report.

In one example, obtaining the defect report is performed by detecting and interpreting speech (speech recognition) in a natural language. The user may e.g., say the phrase "I experience loss of power when driving uphill", which the user device then records via a microphone and pre-processes before using as input to the trained model.

In one further example, obtaining the defect report is performed by receiving text entry via a user interface in a natural language. The user may e.g., enter the phrase "I experience loss of power when driving uphill", which the user device pre-processes before using as input to the trained model.

The text or interpreted speech may further be pre-processed and/or vectorized directly after input. Bag Of Words vectorization techniques may e.g., be applied.

In one example, the defect report is submitted by a driver and indicates "Noise from the left front wheel" in a vectorized format derived from a text or voice source. Fault codes, recorded before the driver submits the defect report, indicate "excessive wear of brake pad for the left front wheel". Sensor data, recorded before the driver submits the defect report, indicate "excessive wear of brake pads for the left front wheel".

**Step 420:** selecting one or more classes from a plurality of classes by classifying the defect report using a trained model, wherein each class indicate a past or unique part of the vehicle 223. Selecting the one or more classes is further described in relation to Fig. 2. Typically, the defect report is provided as input to the trained model, and the one or more selected classes are received as output of the trained model.

In one embodiment, the plurality of classes is classified using a single trained model.

In one embodiment, the model is trained using historical defect reports, for a time-period, in a natural language and the historical solutions to the defect, e.g., replacing a turbo pressure sensor. In one embodiment, the model is trained further using a selection of data collected from sensors for the corresponding time-period and data comprising fault codes for the corresponding time-period.

**Step 430:** performing troubleshooting of the vehicle 223 by identifying one or more parts of the vehicle to be repaired using at least the one or more selected classes.

Performing troubleshooting may e.g., involve providing a proposal to replace parts of a vehicle in an order that most likely resolves a problem, e.g., as illustrated in Fig. 5. In a further example, performing troubleshooting may involve activating backup units or secondary units by the system to resolve the problem. The troubleshooting may be performed by the system, or by a user supported by the system.

It is understood that the term "repaired" includes both mending/renovating a part and replacing a part of the vehicle.

In one example, the one or more classes from the plurality of classes may e.g., indicate or are associated to recommended or estimated diagnostics actions and recommended or estimated repair actions including parts numbers. The diagnostics actions may indicate "optical inspection of brake pads. Repair actions may indicate "replace brake pads 123456789-0". The estimated time to implement the solution is "one hour".

In one example, the coordinator 231 reads the information related to the one or more selected classes, e.g., descriptors and/or reliability values. The coordinator 231 then indicates a set of classes that he finds to be the most likely. In other words, the parts that he finds to be the most likely to be faulty and should be diagnosed. The technician may use this information as a starting point and performs further investigations to arrive at a solution to the reported defect.

In one embodiment, the defect report is obtained from a user interface of the system. An example of obtaining the defect report is described in relation to Fig. 2.

In one embodiment, the step of identifying one or more parts of the vehicle comprises displaying to a user 221, 231, 241 the selected one or more classes. Each of the classes may be displayed with a respective descriptor and/or reliability measure. Fig. 5. illustrates an example of displaying to a user the one or more selected classes. The step of identifying one or more parts of the vehicle may further comprise receiving user input identifying one or more parts of the vehicle. An example of identifying one or more parts of the vehicle is further described in relation to Fig. 2.

In one embodiment, the method further comprises displaying a set of the identified one or more parts of the vehicle to be repaired. As described above, the coordinator 231 may indicate a set of classes that he finds to be the most likely to start to diagnose. This set of classes may then be displayed to the technician 241 to start diagnosis on the parts indicated by the set of classes. Fig. 5 shows an example of how selected classes may be displayed.

In one embodiment, troubleshooting of the vehicle 223 is performed further using the defect report. In some embodiments, the original text of the defect report is attached to the information shared within the system, and e.g., displayed to the coordinator 231 and the technician 241.

**Fig. 5** shows an example of how selected classes may be displayed. The selected one or more classes may be displayed with a class descriptor, a proposed solution, a parts number, a diagnostics action, and an estimated time to implement the solution.

Any other additional information may be shown in addition to the fields shown in Fig.5, such as vehicle fault codes etc.

In embodiments, the communications network 150 communicate using wired or wireless communication techniques that may include at least one of a Local Area Network (LAN), Metropolitan Area Network (MAN), Global System for Mobile Network (GSM), Enhanced Data GSM Environment (EDGE), Universal Mobile Telecommunications System, Long term evolution, High Speed Downlink Packet Access (HSDPA), Wideband Code Division Multiple Access (W-CDMA), Code Division Multiple Access (CDMA), Time Division Multiple Access (TDMA), Bluetooth^{®}, Zigbee^{®}, Wi-Fi, Voice over Internet Protocol (VoIP), LTE Advanced, IEEE802.16m, Wireless MAN-Advanced, Evolved High-Speed Packet Access (HSPA+), 3GPP Long Term Evolution (LTE), Mobile WiMAX (IEEE 802.16e), Ultra Mobile Broadband (UMB) (formerly Evolution-Data Optimized (EV-DO) Rev. C), Fast Low-latency Access with Seamless Handoff Orthogonal Frequency Division Multiplexing (Flash-OFDM), High Capacity Spatial Division Multiple Access (iBurst^{®}) and Mobile Broadband Wireless Access (MBWA) (IEEE 802.20) systems, High Performance Radio Metropolitan Area Network (HIPERMAN), Beam-Division Multiple Access (BDMA), World Interoperability for Microwave Access (WiMAX) and ultrasonic communication, etc., but is not limited thereto.

Moreover, it is realized by the skilled person that the system and/or devices 110, 120, 130, 140 may comprise the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, encoder, decoder, power supply units, power feeders, communication interfaces, communication protocols, etc. which are suitably arranged together for performing the present solution.

Especially, the processor and/or processing means of the present disclosure may comprise one or more instances of processing circuitry, processor modules and multiple processors configured to cooperate with each-other, Central Processing Unit (CPU), a processing unit, a processing circuit, a processor, an Application Specific Integrated Circuit (ASIC), a microprocessor, a Field-Programmable Gate Array (FPGA) or other processing logic that may interpret and execute instructions. The expression "processor" and/or "processing means" may thus represent a processing circuitry comprising a plurality of processing circuits, such as, e.g., any, some or all of the ones mentioned above. The processing means may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A computer implemented method performed by a system (100) configured to perform troubleshooting of a vehicle (223), the method comprising:
obtaining a defect report, by a user device 120 of the vehicle (223), related to the vehicle (223), in a natural language, wherein the defect report is vectorized directly after input by the user device,
selecting, by a troubleshooting device 110 arranged externally to the vehicle (223), one or more classes from a plurality of classes by classifying the defect report using a trained model, wherein each class indicate a part of the vehicle (223),
performing troubleshooting of the vehicle (223), by the troubleshooting device 110, by identifying one or more parts of the vehicle to be repaired using at least the one or more selected classes, wherein troubleshooting of the vehicle (223) is performed further using the pre-processed defect report, wherein identifying one or more parts of the vehicle comprises:
displaying, by a coordinator device 130, to a user the selected one or more classes, each class displayed with a respective descriptor and/or reliability measure,
receiving user input identifying one or more parts of the vehicle,
and generating a work order based on the user input by the coordinator device.

2. The method according to claim 1, the method further comprises displaying a set of the identified one or more parts of the vehicle to be repaired.

3. A system (100) configured to perform troubleshooting of a vehicle (223), the system comprising:
a processor, and a memory, said memory containing instructions executable by said processor, wherein said system is configured to perform the method according to claim 1.

4. The system according to claim 3, wherein the system is further configured to display the identified one or more parts of the vehicle.

5. A computer program product comprising instructions which, when the program is executed by a computer, cause the computer to carry out the method according to any of claims 1-2.

6. A computer-readable storage medium comprising instructions which, when executed by a computer, cause the computer to carry out the steps of the method according to any of claims 1-2.

## Patentansprüche

1. Computerimplementiertes Verfahren, das von einem System (100) ausgeführt wird, das dazu konfiguriert ist, eine Fehlersuche in einem Fahrzeug (223) auszuführen, wobei das Verfahren umfasst:
Erhalten einer Fehlermeldung in einer natürlichen Sprache durch eine Anwendervorrichtung 120 des Fahrzeugs (223), die im Zusammenhang mit dem Fahrzeug (223) steht,
wobei die Fehlermeldung direkt nach der Eingabe durch die Anwendervorrichtung vektorisiert wird,
Auswählen einer oder mehrerer Klassen aus einer Mehrzahl von Klassen durch Klassifizierung der Fehlermeldung unter Verwendung eines trainierten Models durch eine Fehlersuchevorrichtung 110 die außen am Fahrzeug (223) angebracht ist, wobei jede Klasse einen Teil des Fahrzeugs (223) darstellt,
Ausführen einer Fehlersuche an dem Fahrzeug (223) mittels der Fehlersuchevorrichtung 110 durch Identifizieren eines oder mehrerer zu reparierender Teile des Fahrzeugs unter Verwendung mindestens einer oder mehrerer ausgewählter Klassen, wobei die Fehlersuche in dem Fahrzeug (223) ferner unter Verwendung der vorverarbeiteten Fehlermeldung ausgeführt wird, wobei das Identifizieren eines oder mehrerer Teile des Fahrzeugs folgendes umfasst:
dem Anwender die ausgewählten einen oder mehreren Klassen auf einer Koordinatorvorrichtung 130 anzeigen, wobei jede Klasse mit einer jeweiligen Bezeichnung und/oder Zuverlässigkeitsmessung angezeigt wird,
Empfangen einer Benutzereingabe, die einen oder mehrere Teile des Fahrzeugs identifiziert und Erzeugen eines Arbeitsauftrags durch die Koordinatorvorrichtung basierend auf der Benutzereingabe.

2. Verfahren nach Anspruch 1, wobei das Verfahren ferner Anzeigen eines Sets der identifizierten einen oder mehreren zu reparierenden Teile des Fahrzeugs umfasst.

3. System (100), das dazu konfiguriert ist, eine Fehlersuche in einem Fahrzeug (223) auszuführen, das System umfassend:
einen Prozessor und einen Speicher, wobei der genannte Speicher Befehle umfasst, die von dem genannten Prozessor ausgeführt werden, wobei das genannte System dazu konfiguriert ist, das Verfahren nach Anspruch 1 auszuführen.

4. System nach Anspruch 3, wobei das System ferner dazu konfiguriert ist, die identifizierten einen oder mehreren Teile des Fahrzeugs anzuzeigen.

5. Computerprogrammprodukt mit Befehlen, die, wenn das Programm von einem Computer ausgeführt wird, den Computer dazu veranlassen, das Verfahren nach einem der Ansprüche 1-2 auszuführen.

6. Computerlesbares Speichermedium mit Befehlen, die, wenn sie von einem Computer ausgeführt werden, den Computer dazu veranlassen, die Schritte des Verfahrens nach einem der Ansprüche 1-2 auszuführen.

## Revendications

1. Procédé mis en œuvre par ordinateur exécuté par un système (100) configuré pour exécuter un dépannage d'un véhicule (223), le procédé comprenant :
l'obtention d'un rapport de défaut, par un dispositif utilisateur 120 du véhicule (223), lié au véhicule (223), dans une langue naturelle,
dans lequel le rapport de défaut est vectorisé directement après entrée par le dispositif utilisateur,
la sélection, par un dispositif de dépannage 110 agencé à l'extérieur du véhicule (223), d'une ou plusieurs classes parmi une pluralité de classes en classifiant le rapport de défaut en utilisant un modèle entraîné, dans lequel chaque classe indique une partie du véhicule (223),
la réalisation d'un dépannage du véhicule (223), par le dispositif de dépannage 110, en identifiant une ou plusieurs parties du véhicule à réparer en utilisant l'au moins une ou plusieurs classes sélectionnées, dans lequel le dépannage du véhicule (223) est réalisé en outre en utilisant le rapport de défaut prétraité, dans lequel l'identification d'une ou plusieurs parties du véhicule comprend :
l'affichage, par un dispositif coordinateur 130, à un utilisateur de la ou des classes sélectionnées, chaque classe affichée avec un descripteur respectif et/ou une mesure de fiabilité,
la réception d'une entrée utilisateur identifiant une ou plusieurs parties du véhicule, et la génération d'un ordre de travail basé sur l'entrée utilisateur par le dispositif coordinateur.

2. Procédé selon la revendication 1, le procédé comprenant en outre l'affichage d'un ensemble de la ou des parties identifiées du véhicule à réparer.

3. Système (100) configuré pour effectuer un dépannage d'un véhicule (223), le système comprenant :
un processeur, et une mémoire, ladite mémoire contenant des instructions exécutables par ledit processeur, dans lequel ledit système est configuré pour réaliser le procédé selon la revendication 1.

4. Système selon la revendication 3, dans lequel le système est en outre configuré pour afficher la ou les parties identifiées du véhicule.

5. Produit de programme informatique comprenant des instructions qui, lorsque le programme est exécuté par un ordinateur, amènent l'ordinateur à effectuer le procédé selon l'une quelconque des revendications 1 à 2.

6. Support de stockage lisible par ordinateur comprenant des instructions qui, lorsqu'elles sont exécutées par un ordinateur, amènent l'ordinateur à effectuer les étapes du procédé selon l'une quelconque des revendications 1 ou 2.
